# EUROPEAN PATENT SPECIFICATION

(11) **EP 2 495 144 B1**
(45) Date of publication and mention of the grant of the patent: **12.12.2018**
(21) Application number: 10826288.2
(22) Date of filing: 15.10.2010
(51) Int. Cl.: B60T 11/224, B60T 11/22

(54) **WORKING FLUID FLOW CONTROL VALVE FOR MASTER CYLINDER, MASTER CYLINDER COMPRISING SAME, AND BRAKE DEVICE EMPLOYING MASTER CYLINDER**
ARBEITSFLÜSSIGKEITS-FLUSSSTEUERUNGSVENTIL FÜR EINEN MASTER-ZYLINDER, MASTER-ZYLINDER DAMIT UND BREMSVORRICHTUNG MIT DEM MASTER-ZYLINDER
CLAPET DE COMMANDE D'ÉCOULEMENT DE FLUIDE DE TRAVAIL POUR CYLINDRE MAÎTRE, CYLINDRE MAÎTRE COMPRENANT CE DERNIER, ET DISPOSITIF DE FREINAGE EMPLOYANT LE CYLINDRE MAÎTRE

(30) Priority: 26.10.2009 JP 2009245510
(43) Date of publication of application: 05.09.2012
(73) Proprietor: Bosch Corporation, Tokyo 150-8360 (JP)
(72) Inventor: TAKAHASHI, Toshiyuki, Hiki-gun Saitama 355-0813 (JP)
(74) Representative: DREISS Patentanwälte PartG mbB
(86) International application number: PCT/JP2010/006138
(87) International publication number: WO 2011/052151

(56) References cited:
- JP-A- 57 194 150
- JP-A- 2000 142 365
- JP-A- 2000 142 365
- US-A1- 2003 084 665
- US-A1- 2005 235 642
- US-B1- 6 438 955

## Description

### Technical Field

The present invention relates to a technical field of a master cylinder hydraulic fluid flow control valve which is used in a hydraulic pressure-actuated device such as a hydraulic brake device which makes use of a fluid pressure such as an oil pressure and controls the flow of a hydraulic fluid between a master cylinder which generates a fluid pressure and a reservoir tank, a technical field of a master cylinder which includes the master cylinder hydraulic fluid flow control valve, and a technical field of a brake device which includes the master cylinder.

### Background Art

US 2003/084665A1, US 6 438 955 B1 and JP 2000 142365 A disclose throttle valve mechanisms for a master cylinder. Conventionally, with respect to vehicles such as automobiles, there has been known a vehicle which adopts a hydraulic brake device as a hydraulic pressure-actuated device which makes use of a fluid pressure. As such a hydraulic brake device, there has been known a hydraulic brake device where an automatic brake device which performs a traction control or the like based on a brake operation is arranged in a hydraulic circuit between a master cylinder which generates a fluid pressure and a brake cylinder which generates a brake force (see patent document 1, for example).

In the hydraulic brake device disclosed in this patent document 1, when a brake pedal is stepped on by a driver, a piston of the master cylinder is operated so that a hydraulic fluid supplied from a reservoir tank is supplied to the brake cylinder, and also when the loss stroke in the hydraulic circuit between the master cylinder and the brake cylinder or the like is eliminated, a fluid pressure is generated, and the fluid pressure is transmitted to the brake cylinder so that a brake is operated by the master cylinder.

On the other hand, when a condition on an automatic brake operation such as a brake operation for a traction control is satisfied, an electronic control unit operates a pump of an automatic brake device. Due to the operation of the pump, a hydraulic fluid in a reservoir tank is supplied to the brake cylinder and hence, a pressure of the hydraulic fluid in the brake cylinder is elevated whereby an automatic brake is operated.

In the hydraulic brake device disclosed in patent document 1, a master cylinder hydraulic fluid flow control valve is arranged in a fluid passage between a reservoir tank and a master cylinder. The master cylinder hydraulic fluid flow control valve, when a hydraulic fluid is supplied to a master cylinder side from the reservoir tank, widely opens the fluid passage between the reservoir tank and the master cylinder thus allowing the flow of the hydraulic fluid from the reservoir tank to the master cylinder. Further, the master cylinder hydraulic fluid flow control valve, when an operation of the automatic brake is released, makes the reservoir tank and the master cylinder communicate with each other in a state where the fluid passage between the reservoir tank and the master cylinder is largely throttled. Accordingly, when the operation of the automatic brake is released, the master cylinder hydraulic fluid flow control valve prevents a pressure from remaining on the master cylinder side.

As shown in Fig. 6, the master cylinder hydraulic fluid flow control valve a disclosed in patent document 1 includes: an approximately circular-disc-shaped floating valve element e which is arranged in a hydraulic fluid supply hole c formed in the master cylinder b in a vertically floating manner and has a radially extending notched groove d on an upper surface thereof, and a circular cylindrical valve seat member h which is interposed between the hydraulic fluid supply hole c of the master cylinder b and the reservoir tank f and has a circular annular valve seat g on which the floating valve element e is separably seated. The valve seat member h is made of an elastic material such as a grommet and seals a gap between the master cylinder b and the reservoir tank f. The hydraulic fluid supply hole c formed in the master cylinder b and a hydraulic chamber i in the master cylinder b are communicated with each other through a communication hole j, and the hydraulic fluid supply hole c and a hydraulic fluid storage chamber k of the reservoir tank f are communicated with each other through a nipple portion m which is a connection port.

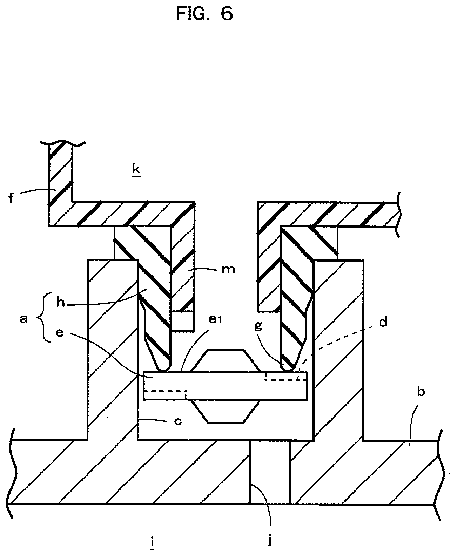

Then, as shown in Fig. 6, in a state where the floating valve element e moves upwardly so that an upper surface e₁ of the floating valve element e is seated on the valve seat g, the reservoir tank f and the master cylinder b are communicated with each other in a state where the fluid passage between the reservoir tank f and the master cylinder b is largely throttled by the notched groove d. Accordingly, it is possible to prevent a pressure from remaining in the hydraulic chamber i of the master cylinder b. In this case, a hydraulic fluid from a hydraulic chamber i side of the master cylinder b does not leak to the outside of the master cylinder b through the gap between the master cylinder b and the reservoir tank f due to a sealing function by the valve seat member h which constitutes a sealing member. Further, although not shown in the drawing, in a state where the floating valve element e moves downwardly so that the upper surface e₁ of the floating valve element e is largely separated from the valve seat g, the fluid passage between the reservoir tank f and the master cylinder b is largely opened. Accordingly, a hydraulic fluid flows in the fluid passage from the reservoir tank f and is supplied to the master cylinder b.

### Prior Art Document

### Patent Document

Patent Document 1: Japanese patent 4148786

### Summary of the Invention

### Problems that the Invention is to solve

In the master cylinder hydraulic fluid flow control valve a disclosed in patent document 1, it is necessary that the floating valve element e which exists outside the valve seat member h is stably seated on the valve seat g of the valve seat member h interposed between the master cylinder b and the reservoir tank f. Accordingly, a diameter of the valve seat g (that is, a seating diameter of the floating valve element e on the valve seat g) is set relatively large.

However, when the seating diameter of the floating valve element e on the valve seat g is set large in this manner, a pressure receiving area of the floating valve element e is increased. Accordingly, when the floating valve element e is seated on the valve seat g due to a fluid pressure from a hydraulic chamber i side of the master cylinder b at the time of operating an automatic brake, a large force is applied to the floating valve element e. When the force applied to the floating valve element e becomes excessively large, the valve seat member h is pushed upwardly thus giving rise to a possibility that the valve seat member h is removed from the hydraulic fluid supply hole c formed in the master cylinder b. Further, since the valve seat member h is made of an elastic material, there exists a possibility that the valve seat member h is deformed or damaged by an excessively large force applied to the floating valve element e so that sealing property of the valve seat member h is deteriorated. Further, due to the deformation of the valve seat member h or the damage on the valve seat member h, the seating posture of the floating valve element e becomes unstable thus giving rise to a possibility that an hydraulic fluid flow control function of the master cylinder hydraulic fluid flow control valve a is impaired. Further, it is necessary to inspect the falling or the removal of the floating valve element e one by one at the time of assembling the master cylinder b and the reservoir tank f. Accordingly, the number of operation man-hours may be increased.

The present invention has been made in view of such circumstances, and it is an object of the present invention to provide a master cylinder hydraulic fluid flow control valve which can effectively decrease a pressure receiving area of a floating valve element when the floating valve element is seated on a valve seat, can favorably maintain a sealing function of a sealing member, and can suppress the increase of the number of assembling operation man-hours, a master cylinder which includes the master cylinder hydraulic fluid flow control valve, and a brake device which uses the master cylinder.

### Means for solving the problem

To overcome the above-mentioned problem, a master cylinder hydraulic fluid flow control valve according to the present invention is arranged in a fluid passage between a reservoir tank and a master cylinder, has a floating valve element and a valve seat on which the floating valve element is seatable, and controls the flow of a hydraulic fluid between the reservoir tank and the master cylinder, wherein the floating valve element is vertically movably accommodated in a cylindrical member which is hermetically mounted on the master cylinder by a sealing member and forms the fluid passage therein, and the valve seat is arranged in the cylindrical member.

The master cylinder hydraulic fluid flow control valve according to the present invention is also characterized in that an upper end surface of the floating valve element is formed into a spherical shape, and the spherical-shaped upper end surface is seatable on the valve seat.

The master cylinder hydraulic fluid flow control valve according to the present invention is also characterized in that a throttle passage which penetrates the floating valve element in the axial direction of the floating valve element and throttles the flow of the hydraulic fluid is arranged in the floating valve element, and in a state where the floating valve element is seated on the valve seat, a reservoir tank side with respect to the valve seat and a master cylinder side with respect to the valve seat are communicated with each other only through the throttle passage.

The master cylinder hydraulic fluid flow control valve according to the present invention is also characterized in that the throttle passage is formed of a groove formed on an outer peripheral surface of the floating valve element.

The master cylinder hydraulic fluid flow control valve according to the present invention is also characterized in that a stopper for preventing the removal of the floating valve element is formed on a lower end of the cylindrical member.

Further, a master cylinder of the present invention includes at least: a cylinder body; a piston which is inserted into the cylinder body hermetically and slidably thus forming a hydraulic chamber in the cylinder body and generates a fluid pressure in the hydraulic chamber when the piston is operated; a hydraulic fluid supply hole which is formed in the cylinder body and is always communicated with the hydraulic chamber; and a master cylinder hydraulic fluid flow control valve which is arranged in the hydraulic fluid supply hole, wherein the master cylinder hydraulic fluid flow control valve is the master cylinder hydraulic fluid flow control valve according to the present invention.

Further, a brake device according to the present invention includes at least: a reservoir tank in which a hydraulic fluid is stored; a master cylinder which receives the supply of the hydraulic fluid in the reservoir tank and generates a fluid pressure when the master cylinder is operated; a brake cylinder which is operated by the fluid pressure from the master cylinder and generates a brake force of a normal brake due to the operation of the master cylinder; and an automatic brake device which is arranged between the master cylinder and the brake cylinder, and allows the brake cylinder to generate a brake force of an automatic brake by supplying the hydraulic fluid in the reservoir tank to the brake cylinder, wherein the master cylinder is the master cylinder according to the present invention.

### Advantage of the Invention

According to the master cylinder hydraulic fluid flow control valve of the present invention having such a constitution, the floating valve element is vertically movably accommodated in the cylindrical member which is hermetically mounted on the master cylinder by the sealing member and forms the fluid passage therein, and the valve seat is arranged in the cylindrical member. Due to such a constitution, the floating valve element is not brought into contact with the sealing member. Accordingly, when the floating valve element is seated on the valve seat at the time of releasing the operation of the automatic brake, it is possible to prevent a force applied to the floating valve element by a fluid pressure from a hydraulic chamber side of the master cylinder from acting on the sealing member. Further, a pressure receiving area of the sealing member is small and hence, it is possible to decrease a pushing force applied to the sealing member due to a fluid pressure from the hydraulic chamber side of the master cylinder. As a result, the deformation of the sealing member or the damage on the sealing member can be suppressed and hence, the sealing property of the sealing member can be favorably maintained.

Further, the floating valve element and the valve seat are arranged in the inside of the cylindrical member and hence, a pressure receiving area of the floating valve element when the floating valve element is seated on the valve seat can be decreased. Accordingly, a force which pushes up the valve seat and is generated by a force applied to the floating valve element by a fluid pressure from the hydraulic chamber side when an operation of the automatic brake is released can be decreased. Accordingly, the seating posture of the floating valve element on the valve seat can be stably held. As a result, a hydraulic fluid flow control function of the master cylinder hydraulic fluid flow control valve can be favorably maintained. Particularly, the floating valve element can be formed into an axially elongated circular columnar shape. Accordingly, the inclining of the floating valve element can be suppressed and hence, the seating posture of the floating valve element on the valve seat can be brought into a more stable state. Further, the upper end surface of the floating valve element which constitutes a seating surface of the floating valve element on the valve seat is formed into a spherical shape and hence, even if the floating valve element is slightly inclined, it is possible to bring the seating posture of the floating valve element on the valve seat into a stable state more effectively.

Further, the throttle passage which penetrates the floating valve element in the axial direction of the floating valve element and throttles the flow of the hydraulic fluid is arranged in the floating valve element, and in a state where the floating valve element is seated on the valve seat, the reservoir tank side with respect to the valve seat and the master cylinder side with respect to the valve seat are communicated with each other only through the throttle passage. Accordingly, even when a state where the floating valve element is seated on the valve seat is held, it is possible to prevent a pressure from remaining in the hydraulic chamber of the master cylinder eventually. By properly setting a flow passage area of the throttle passage, a throttle quantity of the flow of a hydraulic fluid can be set to various values. Particularly, by forming the throttle passage by the groove formed on the outer peripheral surface of the floating valve element, the throttle passage can be easily formed.

Further, the stopper for preventing the removal of the floating valve element is formed on an inner side of the lower end of the cylindrical member in a projecting manner. Due to such a constitution, the removal of the floating valve element accommodated in the cylindrical member from the cylindrical member can be prevented. Accordingly, it is possible to prevent the removal of the floating valve element which is assembled to the cylindrical member in advance and hence, the falling of the floating valve element or the removal of the floating valve element at the time of mounting the cylindrical member on the master cylinder can be prevented. Accordingly, it is unnecessary to inspect the floating valve element one by one at the time of mounting the cylindrical member on the master cylinder and hence, the number of operation man-hours can be decreased accordingly.

Further, the master cylinder of the present invention includes the master cylinder hydraulic fluid flow control valve according to the present invention. Accordingly, a hydraulic fluid flow control function of the master cylinder hydraulic fluid flow control valve can be favorably maintained and hence, the property of discharging and supplying a hydraulic fluid can be surely ensured at the time of performing usual braking by operating the master cylinder and at the time of performing automatic braking by not operating the master cylinder. Accordingly, the respective operational reliabilities of the normal brake and the automatic brake can be enhanced.

Further, the brake device of the present invention includes the master cylinder according to the present invention. Accordingly, as described previously, the master cylinder can enhance the respective operational reliabilities of the normal brake and the automatic brake and hence, both the normal brake and the automatic brake can be surely operated.

### Brief Description of the Drawings

[Fig. 1] Fig. 1 is a view schematically showing a hydraulic brake device which is provided with one example of an embodiment of a master cylinder hydraulic fluid flow control valve according to the present invention.
[Fig. 2] Fig. 2 is a cross-sectional view of a master cylinder which is provide with the master cylinder hydraulic fluid flow control valve of such an example.
[Fig. 3] Fig. 3 shows a reservoir tank connecting connector used in the master cylinder of such an example, wherein Fig. 3(a) is a front view, Fig. 3(b) is a plan view, Fig. 3(c) is a left side view, Fig, 3(d) is a cross-sectional view taken along a line IIID-IIID in Fig. 3(b), Fig. 3(e) is a cross-sectional view taken along a line IIIE-IIIE in Fig. 3(b), Fig. 3(f) is a top plan view of a floating valve element, and Fig. 3(g) is a front view of the floating valve element.
[Fig. 4] Fig. 4 shows the master cylinder hydraulic fluid flow control valve of the example, wherein Fig. 4(a) is a cross-sectional view of a part of the flow control valve showing a sitting state of the floating valve element on a valve seat, and Fig. 4(b) is a cross-sectional view of a part of the flow control valve for explaining the stopping of removal of the floating valve element.
[Fig. 5] Fig. 5 is a cross-sectional view showing another example of the embodiment of the master cylinder according to the present invention.
[Fig. 6] Fig. 6 is a cross-sectional view showing a conventional master cylinder hydraulic fluid flow control valve.

### Mode for Carrying Out the Invention

Hereinafter, a mode for carrying out the present invention is explained in conjunction with drawings.

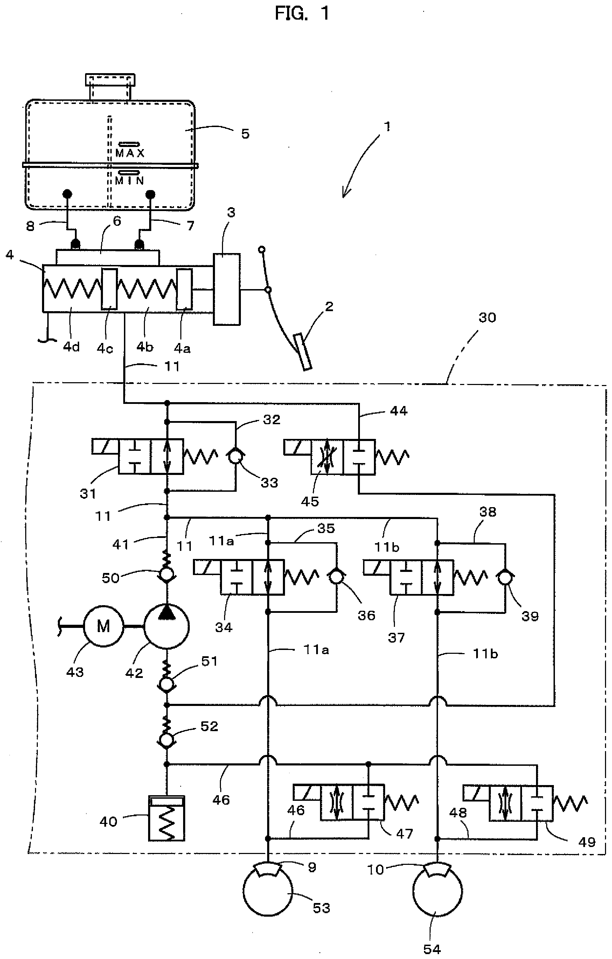

Fig. 1 is a view schematically showing a brake device which is provided with one example of an embodiment of a reservoir tank connecting connector according to the present invention.

As shown in Fig. 1, a hydraulic brake device 1 of this embodiment is basically equal to a conventionally known general hydraulic brake device of two systems. That is, the hydraulic brake device 1 includes: a brake pedal 2; a booster 3, a tandem master cylinder 4; a reservoir tank 5; a reservoir tank connecting connector 6; hoses 7, 8 which constitute hydraulic fluid supply pipes of two systems; brake cylinders of two systems; and hydraulic fluid pressure passages of two systems. Here, brake hydraulic systems of two systems on a brake cylinder side with respect to the tandem master cylinder 4 have the same constitution. Accordingly, Fig. 1 shows one brake hydraulic system and the explanation is made with respect to this one brake hydraulic system, and the illustration and the explanation of the other brake hydraulic system are omitted.

The tandem master cylinder 4 is a conventionally known tandem master cylinder. A primary piston 4a is slidably arranged in a cylinder hole formed in a cylinder body of the tandem master cylinder 4, and a primary hydraulic chamber 4b is defined by the primary piston 4a. Further, a secondary piston 4c is slidably arranged in the cylinder hole formed in the cylinder body of the tandem master cylinder 4, and a secondary hydraulic chamber 4d is defined by the secondary piston 4c. Here, the primary hydraulic chamber 4b is defined between the primary piston 4a and the secondary piston 4c.

The reservoir tank 5 is arranged in a spaced-apart manner from the tandem master cylinder 4, and the reservoir tank connecting connector 6 is mounted on the tandem master cylinder 4. The reservoir tank 5 and the reservoir tank connecting connector 6 are connected to each other by way of the respective hoses 7, 8. A hydraulic fluid in the reservoir tank 5 is supplied to the primary hydraulic chamber 4b and the secondary hydraulic chamber 4d of the tandem master cylinder 4 respectively by way of the hoses 7, 8 of two systems and the reservoir tank connecting connector 6. The primary hydraulic chamber 4b is connected to the brake hydraulic system belonging to one system out of the brake hydraulic systems of two systems, and the secondary hydraulic chamber 4d is connected to the brake hydraulic system belonging to the other system out of two systems. A hydraulic fluid supplied to the primary hydraulic chamber 4b of the tandem master cylinder 4 is supplied to respective brake cylinders 9, 10 by way of a hydraulic fluid pressure passage 11. In this case, the hydraulic fluid pressure passage 11 is connected to the respective brake cylinders 9, 10 by way of branched passages 11a, 11b which are branched from a middle portion of the hydraulic fluid pressure passage 11.

The hydraulic brake device 1 includes a hydraulic unit (H/U) 30. The H/U 30 performs an automatic brake control such as a brake pressure control of an anti-lock braking system (ABS) and a traction control (TRC). A brake hydraulic system belonging to one system of the H/U 30 includes: a normally-open open/close valve 31 which is arranged in the hydraulic fluid pressure passage 11; a bypass passage 32 which bypasses the open/close valve 31; a check valve 33 which is arranged in the bypass passage 32 and allows only the flow of a hydraulic fluid from a tandem master cylinder 4 side to a brake cylinder 9, 10 side; a normally-open open/close valve 34 which is arranged in the branched passage 11a; a bypass passage 35 which bypasses the open/close valve 34; a check valve 36 which is arranged in the bypass passage 35 and allows only the flow of the hydraulic fluid from the tandem master cylinder 4 side to the brake cylinder 9 side; a normally-open open/close valve 37 which is arranged in the branched passage 11b; a bypass passage 38 which bypasses the open/close valve 37; a check valve 39 which is arranged in the bypass passage 38 and allows only the flow of the hydraulic fluid from the tandem master cylinder 4 side to the brake cylinder 10 side; a low-pressure accumulator 40; a fluid pressure passage 41 which connects the low-pressure accumulator 40 and the hydraulic fluid pressure passage 11 on a brake cylinder 9, 10 side of the open/close valve 31 to each other; a pump 42 which is arranged in the fluid pressure passage 41 and pumps out a hydraulic fluid from a low-pressure accumulator 40 side to a hydraulic fluid pressure passage 11 side; a motor (M) 43 which drives the pump 42; a fluid pressure passage 44 which connects the hydraulic fluid pressure passage 11 on a master cylinder side of the open/close valve 31 and the fluid pressure passage 41 on a low-pressure accumulator 40 side of the pump 42 to each other; a normally-closed open/close valve 45 which is arranged in the fluid pressure passage 44; a fluid pressure passage 46 which connects the branched passage 11a on a brake cylinder 9 side of the open/close valve 34 and the fluid pressure passage 41 on a low-pressure accumulator 40 side of the pump 42 to each other; a normally-closed open/close valve 47 which is arranged in the fluid pressure passage 46; a fluid pressure passage 48 which connects the branched passage 11b on a brake cylinder 10 side of the open/close valve 37 and the fluid pressure passage 46 on a fluid pressure passage 41 side of the open/close valve 47 to each other; a normally-closed open/close valve 49 which is arranged in the fluid pressure passage 48; a check valve 50 which is arranged in the fluid pressure passage 41 on a discharge side of the pump 42 and allows only the flow of the hydraulic fluid from the pump 42 to the hydraulic fluid pressure passage 11; a check valve 51 which is arranged in the fluid pressure passage 41 on a suction side of the pump 42 and on a pump 42 side from a point where the fluid pressure passage 41 merges with the fluid pressure passage 44 and allows only the flow of the hydraulic fluid toward the pump 42, and a check valve 52 which is arranged in the fluid pressure passage 41 between a point where the fluid pressure passage 41 is merged with the fluid pressure passage 44 and a point where the fluid pressure passage 41 is merged with the fluid pressure passage 46 and allows only the flow of the hydraulic fluid toward the pump 42. Although not shown in the drawing, the brake hydraulic system belonging to the other system of the H/U 30 also has the completely same constitution as the brake hydraulic system belonging to one system. In this case, a pump belonging to the other system is driven by the motor (M) 43 which is also used by one system in common with the other system.

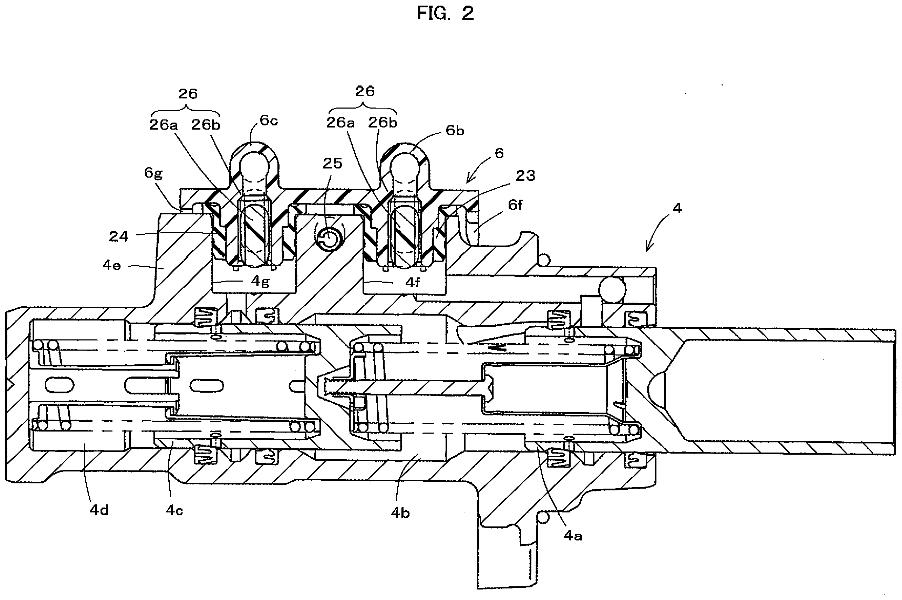

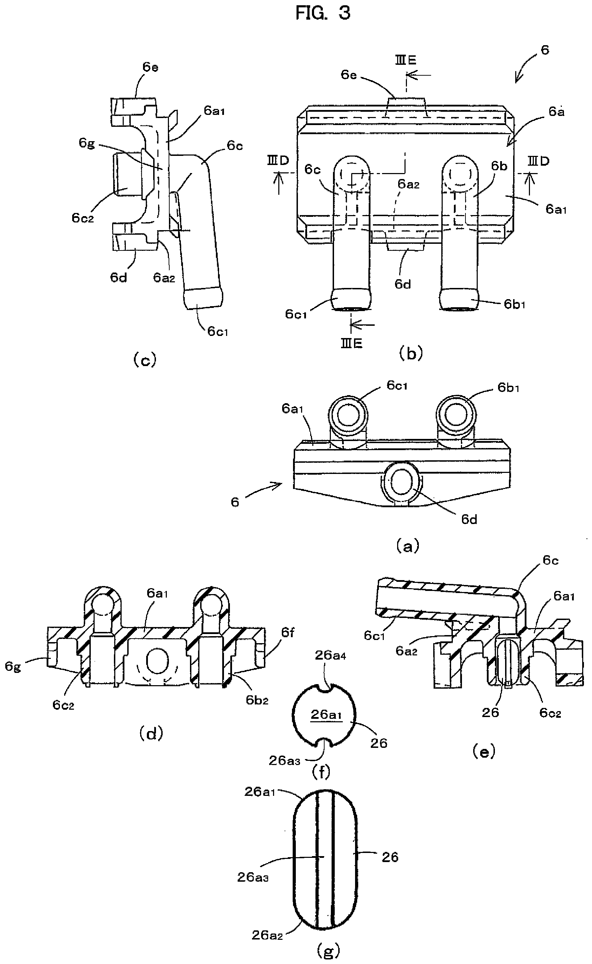

As shown in Fig. 2, the reservoir tank connecting connector 6 is mounted on an upper portion of the tandem master cylinder 4. As shown in Fig. 3 (a) to Fig. 3(c), the reservoir tank connecting connector 6 includes: a connector body 6a having a rectangular shape or an approximately rectangular shape; a pair of hose connecting tubular bodies 6b, 6c having an L-shaped tube which is fixed to a planar upper portion 6a₁ of the connector body 6a with a predetermined distance therebetween in a state where the pair of hose connecting tubular bodies 6b, 6c penetrates the upper portion 6a₁; and a pair of mounting boss portions 6d, 6e. The pair of hose connecting tubular bodies 6b, 6c forms fluid passages between the reservoir tank 5 and the primary hydraulic chamber 4b and the secondary hydraulic chamber 4d of the tandem master cylinder 4. A shape of the connector body 6a is not limited to the approximately rectangular shape and may be formed into a desired shape.

The pair of L-shaped hose connecting tubular bodies 6b, 6c respectively includes a nipple-shaped hose connecting portion 6b₁, 6c₁ which largely projects from one long side edge 6a₂ of the connector body 6a, and a circular cylindrical master cylinder connecting nipple portion 6b₂, 6c₂ which is arranged inside a hydraulic fluid supply hole 4f, 4g formed in a hydraulic fluid supplying boss portion 4e of the tandem master cylinder 4 shown in Fig. 2. The reservoir tank connecting connector 6 is an integral body formed of the connector body 6a and the pair of L-shaped hose connecting tubular bodies 6b, 6c by resin molding. The hoses 7, 8 which have one ends thereof connected to the reservoir tank 5 have the other ends thereof respectively connected to the hose connecting portions 6b₁, 6c₁. Further, as shown in Fig. 2, the master cylinder connecting nipple portions 6b₂, 6c₂ which constitute master-cylinder-side connecting portions are liquid-tightly fitted in the hydraulic fluid supply holes 4f, 4g of the master cylinder 4 by way of sealing members 23, 24 such as grommets respectively, and the reservoir tank connecting connector 6 is supported on the hydraulic fluid supplying boss portion 4e. Accordingly, the master cylinder connecting nipple portions 6b₂, 6c₂ constitute cylindrical members of the present invention. The respective hydraulic fluid supply holes 4f, 4g are respectively communicated with the primary hydraulic chamber 4b and the secondary hydraulic chamber 4d when the master cylinder 4 is in a non-operating state.

The pair of mounting boss portions 6d, 6e are arranged coaxially, and are connected to the hydraulic fluid supplying boss portion 4e by a shaft 25. Further, as shown in Fig. 3(d), support portions 6f, 6g are respectively formed on short-side edges on both sides of the upper portion 6a₁ of the connector body 6a in a downwardly erected manner. These support portions 6f, 6g can be brought into contact with the hydraulic fluid supplying boss portion 4e of the master cylinder 4.

As shown in Fig. 2, Fig. 3(d), and Fig. 4(a), a master cylinder hydraulic fluid flow control valve 26 is arranged in the respective master cylinder connecting nipple portions 6b₂, 6c₂ of the respective hose connecting tubular bodies 6b, 6c respectively. The master cylinder hydraulic fluid flow control valve 26 includes: a floating valve element 26a which is arranged in each master cylinder connecting nipple portion 6b₂, 6c₂ in a vertically movable manner and is made of a resin having specific gravity lower than specific gravity of a hydraulic fluid (for example, pre-propylene, a 6N foaming agent or the like) ; and a circular annular valve seat 26b which is formed on an inner peripheral surface of each master cylinder connecting nipple portion 6b₂, 6c₂ and on which the floating valve element 26a is separably seated. As shown in Fig. 3(f) and Fig. 3(g), the floating valve element 26a is formed as a float which has upper and lower end surfaces 26a₁, 26a₂ thereof formed into a spherical shape and has an vertically elongated circular columnar shape. An outer diameter of the floating valve element 26a (a diameter in the transverse cross section) is set smaller than an inner diameter of each master cylinder connecting nipple portion 6b₂, 6c₂ by a predetermined value.

On an outer peripheral surface of the floating valve element 26a, a pair of grooves 26a₃, 26a₄ each of which has an arcuate shape in the transverse cross section and extends linearly in the axial direction is formed in such a manner that the pair of grooves 26a₃, 26a₄ is arranged symmetrically with respect to the center of the floating valve element 26a in the axial direction. These grooves 26a₃, 26a₄ are respectively formed over the entire length of the floating valve element 26a between the upper and lower end surfaces 26a₁, 26a₂ respectively. Here, the number of grooves 26a₃, 26a₄ is not limited to two, and the number of grooves may be set desirably. When plural grooves are formed, it is desirable that the respective grooves are formed on the floating valve element 26a equidistantly in the circumferential direction for further stabilizing the posture of the floating valve element 26a and for allowing the hydraulic fluid to flow each groove more uniformly.

Further, a stopper 28 which is formed of the predetermined number of projections projecting inwardly is formed on lower ends of the respective master cylinder connecting nipple portions 6b₂, 6c₂. The stopper 28 may also be formed of an annular flange which projects inwardly.

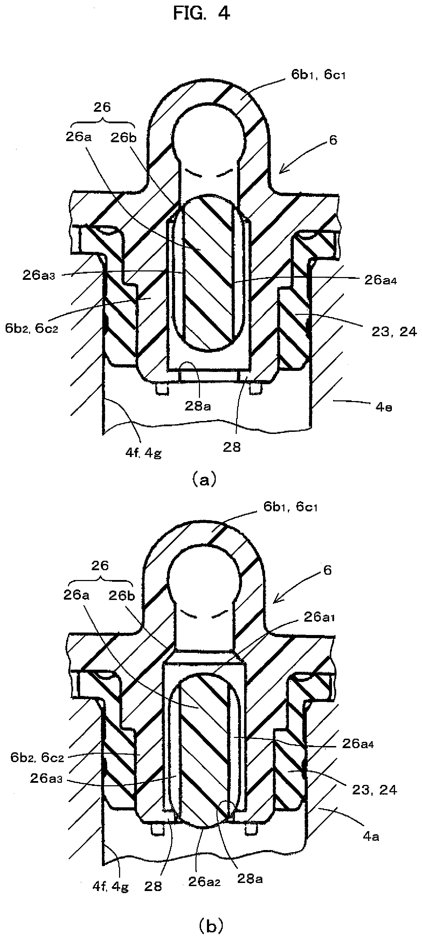

As shown in Fig. 4(a), a predetermined quantity of hydraulic fluid is stored in the reservoir tank 5, and in a state where the brake is in a non-operating state, the respective floating valve elements 26a of the respective master cylinder hydraulic fluid flow control valves 26 are upwardly moved so that the upper end surface 26a₁ of the respective floating valve elements 26a are seated on the corresponding valve seats 26b. As a result, a master cylinder 4 side with respect to the valve seat 26b and a reservoir tank 5 side with respect to the valve seat 26b are communicated with each other in a throttled state only through the pair of grooves 26a₃, 26a₄. Accordingly, the respective grooves 26a₃, 26a₄ constitute a throttle passage of the present invention. In this state, it is possible to prevent a pressure from remaining in the hydraulic chambers 4b, 4d of the master cylinder 4, and the flow of the hydraulic fluid from the master cylinder 4 side to the reservoir tank 5 side can be throttled.

Further, when a negative pressure is generated on the master cylinder 4 side with respect to the respective valve seats 26b, the respective floating valve elements 26a move downwardly so that the upper end surfaces 26a₁ of the respective floating valve elements 26a are separated from the respective valve seats 26b whereby valve opening quantities of the respective master cylinder hydraulic fluid flow control valves 26 are increased. These valve opening quantities become a quantity corresponding to differential pressure quantity between a fluid pressure on the reservoir tank 5 side (substantially atmospheric pressure) and a fluid pressure on the master cylinder 4 side (negative pressure) . Accordingly, a hydraulic fluid in the reservoir tank 5 smoothly flows toward the primary hydraulic chamber 4b and the secondary hydraulic chamber 4d through the respective opened master cylinder hydraulic fluid flow control valves 26, gaps defined between the inner peripheral surfaces of the respective master cylinder connecting nipple portions 6b₂, 6c₂ and the outer peripheral surfaces of the respective floating valve elements 26a, the pair of grooves 26a₃, 26a₄, and the respective hydraulic fluid supply holes 4f, 4g formed on the tandem master cylinder 4. Accordingly, the hydraulic fluid in the reservoir tank 5 easily flows into the master cylinder 4 so that the property of supplying the hydraulic fluid can be favorably maintained. Here, as shown in Fig. 4(b), even when the lower end surfaces 26a₂ of the respective floating valve elements 26a which largely move downwardly are brought into contact with projecting end peripheries 28a of the stopper 28 respectively, the hydraulic fluid smoothly flows toward the primary hydraulic chamber 4b and the secondary hydraulic chamber 4d through areas of the lower end surfaces 26a₂ of the floating valve elements 26a which are not brought into contact with the projecting end peripheries 28a so that the property of supplying the hydraulic fluid can be favorably maintained.

In the master cylinder hydraulic fluid flow control valve 26 of this embodiment, the circular annular valve seat 26b is formed on the inner peripheral surfaces of the respective master cylinder connecting nipple portions 6b₂, 6c₂ and hence, a diameter of the valve seat 26b is set smaller than a diameter of the conventional valve seat g shown in Fig. 6. Accordingly, in a state where the floating valve element 26a shown in Fig. 4 (a) is seated on the valve seat 26b, a pressure receiving area of the floating valve element 26a becomes smaller than a pressure receiving area of the conventional floating valve element e. Further, the floating valve element 26a is formed into an axially elongated circular columnar shape. Accordingly, when the respective floating valve elements 26a are seated on the respective valve seats 26b due to a fluid pressure from the respective hydraulic chambers 4b, 4d sides of the master cylinder 4 at the time of releasing an operation of the automatic brake by the H/U 30, for example, a force applied to each floating valve element 26a due to such a fluid pressure is small and hence, a force which pushes up each valve seat 26b is also small. Accordingly, the seating posture of the respective floating valve elements 26a on the respective valve seats 26b can be held in a stable state. As a result, the hydraulic fluid flow control function of the master cylinder hydraulic fluid flow control valve 26 can be favorably maintained.

Further, the respective floating valve elements 26a are not brought into contact with the respective sealing members 23, 24 and hence, a pressure receiving area of each sealing member 23, 24 is small whereby a force which pushes up each sealing member 23, 24 due to the fluid pressure applied from each hydraulic chamber 4b, 4d side of the master cylinder 4 is small. Accordingly, the removal of the respective sealing members 23, 24 from the respective hydraulic fluid supply holes 4f, 4g can be prevented, and the deformation of the respective sealing members 23, 24 and the damage on the respective sealing members 23, 24 can be suppressed. As a result, the sealing property of the respective sealing members 23, 24 can be favorably maintained

Next, the manner of operation of the hydraulic brake device 1 of this embodiment having the above-mentioned constitution is explained.

In a normal state where the brake is not operated, all respective open/close valves 31, 34, 37 belonging to one system are set at a valve open position, while all respective open/close valves 45, 47, 49 are set at a valve closed position. The respective open/close valves belonging to the other system are set in the same manner as the respective open/close valves belonging to this one system. Further, when a normal brake is in a non-operating state due to the stepping of the brake pedal 2, as shown in Fig. 4(a), each floating valve element 26a is seated on each valve seat 26b.

In such a state, when a driver steps in the brake pedal 2, the booster 3 is operated so that a pedal step-in force is multiplied or boosted at a predetermined servo rate and the boosted force is outputted. The primary piston 4a of the cylinder body of the tandem master cylinder 4 is operated with the output of the booster 3 so that a hydraulic fluid in the primary hydraulic chamber 4b is supplied to the brake cylinder 9 belonging to one system through the hydraulic fluid pressure passage 11, the open/close valve 31, the branched passage 11a and the open/close valve 34, and the hydraulic fluid is supplied to the brake cylinder 10 through the branched passage 11b and the open/close valve 37 in the same manner. Here, due to the respective open/close valves 45, 47, 49 at a valve closed position and the check valve 50, the hydraulic fluid from the primary hydraulic chamber 4b does not flow into the low pressure reservoir 40. Further, the secondary piston 4c is operated so that a hydraulic fluid in the secondary hydraulic chamber 4d is also supplied to the brake cylinder belonging to the other system in the same manner as one system. When a loss stroke of the respective brake systems is eliminated, the tandem master cylinder 4 generates a fluid pressure. The fluid pressure of the tandem master cylinder 4 is transmitted to the respective brake cylinders 9, 10 belonging to one system and the respective brake cylinders belonging to the other system. Accordingly, the respective brake cylinders 9, 10 belonging to one system generate a brake force so that a normal brake is applied to wheels 53, 54 belonging to one system, and the respective brake cylinders belonging to the other system generate a brake force so that a normal brake is applied to wheels belonging to the other system.

When the stepping of the brake pedal 2 is released, the booster 3 is brought into a non-operating state, and the tandem master cylinder 4 is brought into a non-operating state shown in Fig. 1 and Fig. 2. Due to such an operation, the pressure in the primary hydraulic chamber 4b of the tandem master cylinder 4, the pressure in the secondary hydraulic chamber 4d of the tandem master cylinder 4, and the pressure in the hydraulic chambers of the respective brake cylinders 9, 10 become an atmospheric pressure, and a normal brake is released.

On the other hand, when a condition on an automatic brake operation is satisfied, for example, the operation of the H/U 30 is controlled by an electronic control unit not shown in the drawing. That is, in one system, the respective open/close valves 31, 34, 37 are set at a valve closed position, and the open/close valve 45 is set at a valve open position. Here, both the respective open/close valves 47, 49 are held at a valve closed position. The motor (M) 43 is driven simultaneously with the driving of the valves. As a result, the pump 42 sucks a hydraulic fluid in the reservoir tank 5 through the open/close valve 45, the primary hydraulic chamber 4b and the master cylinder hydraulic fluid flow control valve 26 which are respectively opened and the hose 7, and discharges the hydraulic fluid to the hydraulic fluid pressure passage 11 on a respective brake cylinders 9, 10 side with respect to the open/close valve 31 which is at a valve closed position. In this case, a negative pressure is generated on the primary hydraulic chamber 4b side and hence, the floating valve element 26a of the master cylinder hydraulic fluid flow control valve 26 moves downwardly and is separated from the valve seat 26b. Due to such an operation, a valve opening quantity of the master cylinder hydraulic fluid flow control valve 26 is increased, and the outer diameter of the floating valve element 26a is set larger than the inner diameter of the master cylinder connecting nipple portion 6b₂ by a predetermined value whereby, at the time of sucking the hydraulic fluid by the pump 42, the flow of the hydraulic fluid in the master cylinder hydraulic fluid flow control valve 26 becomes smooth. Accordingly, the property of supplying the hydraulic fluid from the reservoir tank 5 can be favorably maintained. At this stage of operation, the pump 42 sucks the hydraulic fluid in the low-pressure reservoir 40 and discharges the hydraulic fluid to the hydraulic fluid pressure passage 11 in the same manner.

The hydraulic fluid discharged to the hydraulic fluid pressure passages 11 from the pump 42 is supplied to the respective corresponding brake cylinders 9, 10 through the respective branched passages 11a, 11b and respective open/close valves 34, 37. Here, open/close valve 31 is at a valve closed position and hence, the hydraulic fluid discharged from the pump 42 does not flow toward the tandem master cylinder 4 and is efficiently supplied toward the respective brake cylinders 9, 10. When a loss stroke of the respective brake cylinders 9, 10 is eliminated, a pressure of the hydraulic fluid in the respective brake cylinders 9, 10 is increased thus generating a brake pressure. Further, also in the other system, a pressure of the hydraulic fluid in the respective brake cylinders is increased in the same manner as one system thus generating a brake pressure. Due to such an operation, an automatic brake is applied to the respective wheels 53, 54 belonging to one system and the respective wheels belonging to the other system.

When the condition on the automatic brake operation is eliminated, due to a control performed by the electronic control unit, in one system, the respective open/close valves 31, 34, 37 are set at a valve open position and the open/close valve 45 is set at a valve closed position. The motor (M) 43 is stopped simultaneously with such driving of the valves. Accordingly, the pump 42 is stopped so that the suction and the discharge of the hydraulic fluid by the pump 42 are stopped. Then, the hydraulic fluid which is supplied to the inside of the respective brake cylinders 9, 10 is returned to the reservoir tank 5 through the respective branched passages 11a, 11b, the respective open/close valves 31, 34, 37, the hydraulic fluid pressure passage 11, the primary hydraulic chamber 4b, the master cylinder hydraulic fluid flow control valve 26, the reservoir tank connecting connector 6, and the hose 7. Further, also in the other system, the hydraulic fluid supplied to the inside of the respective brake cylinders is returned to the reservoir tank 5. Due to such an operation, the automatic brake is released.

In this case, the floating valve elements 26a of the respective master cylinder hydraulic fluid flow control valves 26 are seated on the corresponding valve seats 26b. Here, a fluid pressure of the hydraulic fluid acts on the lower end surface 26a₂ of each floating valve element 26a and this fluid pressure is relatively high. However, as described above, in a state where the respective floating valve element 26a is seated on each valve seat 26b, a pressure receiving area of each floating valve element 26a is small and hence, a force which each floating valve element 26a pushes up each valve seat 26b, that is, a force which pushes up the reservoir tank 5 is also small. Accordingly, the seating posture of each floating valve element 26a on each valve seats 26b can be held in a stable state. Further, the pressure receiving areas of the respective sealing members 23, 24 are relatively small, and the respective floating valve elements 26a are not brought into contact with the respective sealing members 23, 24 and hence, a pushing force applied to the respective sealing members 23, 24 due to a fluid pressure of the hydraulic fluid is small. Accordingly, the deformation of the respective sealing members 23, 24 and the damage on the respective sealing members 23, 24 can be suppressed. As a result, the sealing property of the respective sealing members 23, 24 can be favorably maintained.

According to the master cylinder hydraulic fluid flow control valve 26 of this embodiment, the flow control valve 26 is arranged in the master cylinder connecting nipple portions 6b₂, 6c₂ of the reservoir tank connecting connector 6 respectively, and the flow control valve 26 includes the circular columnar floating valve element 26a and the valve seat 26b. That is, the floating valve element 26a and the valve seat 26b are arranged in the master cylinder connecting nipple portions 6b₂, 6c₂ respectively. Due to such a constitution, the respective floating valve elements 26a are not brought into contact with the respective sealing members 23, 24. Accordingly, when the respective floating valve elements 26a are seated on the respective valve seats 26b as described above at the time of releasing the operation of the automatic brake, it is possible to prevent a force applied to the respective floating valve elements 26a by the fluid pressure from the respective hydraulic chambers 4b, 4d side of the master cylinder 4 from acting on the respective sealing members 23, 24. Further, the pressure receiving areas of the respective sealing members 23, 24 are small and hence, it is possible to decrease a pushing force applied to the respective sealing member 23, 24 due to the fluid pressure from the respective hydraulic chamber 4b, 4d sides of the master cylinder 4. As a result, it is possible to prevent the respective sealing members 23, 24 from being removed from the master cylinder connecting nipple portions 6b₂, 6c₂, and the deformation of the respective sealing members 23, 24 or the damage on the respective sealing members 23, 24 can be suppressed and hence, the sealing property of the respective sealing members 23, 24 can be favorably maintained.

The floating valve element 26a and the valve seat 26b are arranged in the inside of the master cylinder connecting nipple portions 6b₂, 6c₂ respectively and hence, the pressure receiving areas of the respective floating valve elements 26a when the respective floating valve elements 26a are seated on the respective valve seats 26b can be decreased. Accordingly, as described above, it is possible to decrease a force which pushes up the respective valve seats 26b and is generated by a force applied to the respective floating valve elements 26a by the fluid pressure from the respective hydraulic chambers 4b, 4d sides when an operation of the automatic brake is released. Accordingly, the seating posture of the floating valve elements 26a on the respective valve seats 26b can be stably held. As a result, the hydraulic fluid flow control function of the master cylinder hydraulic fluid flow control valve 26 can be favorably maintained. Particularly, the floating valve element 26a is formed into an axially elongated circular columnar shape and hence, the inclining of the floating valve elements 26a can be suppressed. Accordingly, the seating posture of the floating valve elements 26a on the respective valve seats 26b can be brought into a more stable state. Further, the upper end surface 26a₁ of each floating valve element 26a which constitutes a seating surface of the floating valve element 26a on each valve seat 26b is formed into a spherical shape and hence, even if the floating valve element 26a is slightly inclined, it is possible to bring the seating posture of the floating valve element 26a on each valve seat 26b into a stable state more effectively.

Further, the pair of grooves 26a₃, 26a₄ which constitutes throttle passages is formed on an outer peripheral surface of the floating valve element 26a. These grooves 26a₃, 26a₄ are formed linearly such that the grooves 26a₃, 26a₄ axially extend between upper and lower end surfaces 26a₁, 26a₂ of the floating valve element 26a. Further, a depth of each groove 26a₃, 26a₄ is set such that a position of a bottom of each groove 26a₃, 26a₄ is arranged inside an inner periphery of the valve seat 26b. Accordingly, even when the floating valve element 26a is seated on the valve seat 26b, it is possible to make the master cylinder 4 side and the reservoir tank 5 side communicated with each other in a throttled state only through the respective grooves 26a₃, 26a₄. Accordingly, even when a state where the floating valve element 26a is seated on the valve seat 26b is held, it is possible to prevent a pressure from remaining in the hydraulic chambers 4b, 4d of the master cylinder eventually. By properly setting a flow passage area of the respective grooves 26a₃, 26a₄, a throttle quantity of the flow of a hydraulic fluid can be set to various values. Particularly, by forming the throttle passages by the respective grooves 26a₃, 26a₄ formed on the outer peripheral surface of each floating valve element 26a, the throttle passage can be easily formed.

On the lower end of each master cylinder connecting nipple portions 6b₂, 6c₂, a predetermined number of stoppers 28 are formed in an inwardly projecting manner so as to prevent the floating valve element 26a from being removed from the master cylinder connecting nipple portions 6b₂, 6c₂. Due to such a constitution, it is possible to prevent the removal of the floating valve element 26a which is assembled to the reservoir tank connecting connector 6 in advance and hence, the falling of the floating valve element 26a or the removal of the floating valve element 26a at the time of mounting the reservoir tank connecting connector 6 on the tandem master cylinder 4 can be prevented. Accordingly, it is unnecessary to inspect the floating valve element 26a one by one at the time of mounting the reservoir tank connecting connector 6 on the tandem master cylinder 4 and hence, the number of operation man-hours can be decreased accordingly.

Further, according to the tandem master cylinder 4 of this embodiment which is provided with the reservoir tank connecting connector 6, a hydraulic fluid flow control function of the master cylinder hydraulic fluid flow control valve 26 can be favorably maintained and hence, the property of discharging and supplying a hydraulic fluid can be surely ensured at the time of performing usual braking by operating the tandem master cylinder 4 and at the time of performing automatic braking by not operating the tandem master cylinder 4. Accordingly, the reliability of the H/U 30 in a normal brake operation and an automatic brake operation can be enhanced.

Further, according to the hydraulic brake device 1 of this embodiment which includes the tandem master cylinder 4, the tandem master cylinder 4 can enhance the reliability of the H/U 30 in the normal brake operation and the automatic brake operation and hence, the H/U 30 can be surely operated in both the normal brake operation and the automatic brake operation.

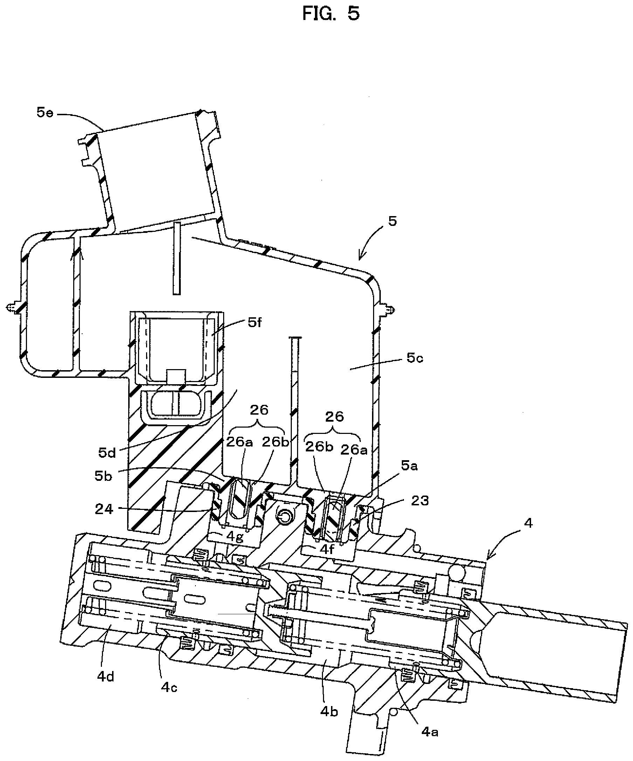

Fig. 5 is a cross-sectional view of a tandem master cylinder having a master cylinder hydraulic fluid flow control valve according to another embodiment of the present invention.

In the previously-mentioned embodiment, the reservoir tank 5 is not directly mounted on the tandem master cylinder 4 and is connected to the tandem master cylinder 4 by way of the reservoir tank connecting connector 6. To the contrary, as shown in Fig. 5, the tandem master cylinder 4 of this embodiment is not provided with the reservoir tank connecting connector 6 . That is, the reservoir tank 5 is directly mounted on the tandem master cylinder 4. A conventionally known reservoir tank can be used as the reservoir tank 5.

On a bottom portion of the reservoir tank 5, circular cylindrical master cylinder connecting nipple portions 5a, 5b having the exactly same constitution as the master cylinder connecting nipple portions 6b₂, 6c₂ are formed respectively. The respective master cylinder connecting nipple portions 5a, 5b are hermetically supported in hydraulic fluid supply holes 4f, 4g formed in hydraulic fluid supply boss portions 4e of the tandem master cylinder 4 using respective sealing members 23, 24. The respective master cylinder connecting nipple portions 5a, 5b constitute the cylindrical members of the present invention. The respective master cylinder connecting nipple portions 5a, 5b respectively make a primary hydraulic chamber 4b and a secondary hydraulic chamber 4d communicated with a primary fluid storage chamber 5c and a secondary fluid storage chamber 5d of the reservoir tank 5 with each other respectively.

In the inside of the respective master cylinder connecting nipple portions 5a, 5b, the master cylinder hydraulic fluid flow control valve 26 is arranged respectively. Each master cylinder hydraulic fluid flow control valve 26 has the completely same constitution as the master cylinder hydraulic fluid flow control valve 26 of the above-mentioned embodiment, and includes a floating valve element 26a and a valve seat 26b. In Fig. 5, symbol 5e indicates a hydraulic fluid filling port through which a hydraulic fluid is filled into the reservoir tank 5, and symbol 5f indicates a fluid level detection device for detecting a fluid level of a hydraulic fluid in the reservoir tank 5.

All constitutions of the master cylinder hydraulic fluid flow control valve 26, the tandem master cylinder 4 and the hydraulic brake device 1 of this embodiment other than the above-mentioned constitution are equal to the corresponding constitutions of the above-mentioned embodiment. Further, the manner of operation and advantageous effects of the master cylinder hydraulic fluid flow control valve 26, the tandem master cylinder 4 and the hydraulic brake device 1 of this embodiment are equal to the corresponding manner of operation and acquired advantageous effects of the corresponding master cylinder hydraulic fluid flow control valve 26, the tandem master cylinder 4 and the hydraulic brake device 1 of the above-mentioned embodiment.

The present invention is not limited to the above-mentioned respective embodiments. For example, the H/U 30 is not limited to the H/U 30 described in the above-mentioned respective embodiments, and a known other H/U 30 can be also used.

### Industrial Applicability

The master cylinder hydraulic fluid flow control valve according to the present invention is suitably applicable to a master cylinder hydraulic fluid flow control valve which controls the flow of a hydraulic fluid between a reservoir tank which stores a hydraulic fluid therein and a master cylinder which generates a fluid pressure.

Further, the master cylinder which is provided with the master cylinder hydraulic fluid flow control valve according to the present invention can be used in a hydraulic pressure-actuated device such as a hydraulic brake device which makes use of a fluid pressure such as an oil pressure, and is suitably applicable to the master cylinder which generates a fluid pressure.

Further, the brake device according to the present invention is suitably applicable to a hydraulic brake device which uses a master cylinder.

## Claims

1. A master cylinder hydraulic fluid flow control valve (26) which is arranged in a fluid passage between a reservoir tank (5) and a master cylinder (4), has a floating valve element (26a) and a valve seat (26b) on which the floating valve element (26a) is seatable, and controls the flow of a hydraulic fluid between the reservoir tank (5) and the master cylinder (4), wherein the floating valve element (26a) is vertically movably accommodated in a cylindrical member (6b2, 6c2) which is hermetically mounted on the master cylinder (4) by a sealing member (23, 24) and forms the fluid passage therein, and the valve seat (26b) is arranged in the cylindrical member (6b2, 6c2),
**characterized in that** an upper end surface (26a1) of the floating valve element (26a) is formed into a spherical shape, and the spherical-shaped upper end surface is seatable on the valve seat (26b) .

2. The master cylinder hydraulic fluid flow control valve (26) according to claim 1, wherein a throttle passage which penetrates the floating valve element (26a) in the axial direction of the floating valve element (26a) and throttles the flow of the hydraulic fluid is arranged in the floating valve element (26a), and in a state where the floating valve element (26a) is seated on the valve seat (26b), a reservoir tank side with respect to the valve seat (26b) and a master cylinder side with respect to the valve seat (26b) are communicated with each other only through the throttle passage.

3. The master cylinder hydraulic fluid flow control valve (26) according to claim 2, wherein the throttle passage is formed on a groove (26a3, 26a4) formed on an outer peripheral surface of the floating valve element (26a).

4. The master cylinder hydraulic fluid flow control valve (26) according to any one of claims 1 to 3, wherein a stopper (28) for preventing the removal of the floating valve element (26a) is formed on a lower end of the cylindrical member (6b2, 6c2).

5. A master cylinder (4) **characterized by**:
a cylinder body;
a piston (4a, 4c) which is inserted into the cylinder body hermetically and slidably thus forming a hydraulic chamber (4b, 4d) in the cylinder body and generates a fluid pressure in the hydraulic chamber (4b, 4d) when the piston (4a, 4c) is operated;
a hydraulic fluid supply hole (4f, 4g) which is formed in the cylinder body and is always communicated with the hydraulic chamber (4b, 4d); and
a master cylinder hydraulic fluid flow control valve (26) which is arranged in the hydraulic fluid supply hole (4f, 4g), wherein
the master cylinder hydraulic fluid flow control valve (26) is the master cylinder hydraulic fluid flow control valve (26) according to any one of claims 1 to 4.

6. A brake device (1) **characterized by**:
a reservoir tank (5) in which a hydraulic fluid is stored;
a master cylinder (4) which receives the supply of the hydraulic fluid in the reservoir tank (5) and generates a fluid pressure when the master cylinder (4) is operated;
a brake cylinder (9, 10) which is operated by the fluid pressure from the master cylinder (4) and generates a brake force of a normal brake due to the operation of the master cylinder (4); and
an automatic brake device which is arranged between the master cylinder (4) and the brake cylinder (9, 10), and allows the brake cylinder (9, 10) to generate a brake force of an automatic brake by supplying the hydraulic fluid in the reservoir tank (5) to the brake cylinder (9, 10), wherein the master cylinder (4) is the master cylinder (4) according to claim 5.

## Patentansprüche

1. Hauptzylinderhydraulikfluid-Durchflusssteuerventil (26), das in einem Fluiddurchgang zwischen einem Vorratstank (5) und einem Hauptzylinder (4) angeordnet ist, ein schwimmendes Ventilelement (26a) und einen Ventilsitz (26b), auf dem das schwimmende Ventilelement (26a) absetzbar ist, besitzt und den Durchfluss eines Hydraulikfluids zwischen dem Vorratstank (5) und dem Hauptzylinder (4) steuert, wobei das schwimmende Ventilelement (26a) in einem zylindrischen Element (6b2, 6c2), das durch ein Dichtungselement (23, 24) auf dem Hauptzylinder (4) hermetisch montiert ist und in ihm den Fluiddurchgang bildet, vertikal beweglich aufgenommen ist und der Ventilsitz (26b) im zylindrischen Element (6b2, 6c2) angeordnet ist,
**dadurch gekennzeichnet, dass** eine obere Stirnfläche (26a1) des schwimmenden Ventilelements (26a) in einer Kugelform gebildet ist und kugelförmige obere Stirnfläche auf dem Ventilsitz (26b) absetzbar ist.

2. Hauptzylinderhydraulikfluid-Durchflusssteuerventil (26) nach Anspruch 1, wobei ein Drosseldurchgang, der das schwimmende Ventilelement (26a) in axialer Richtung des schwimmenden Ventilelements (26a) durchdringt und den Durchfluss des Hydraulikfluids drosselt, im schwimmenden Ventilelement (26a) angeordnet ist und in einem Zustand, in dem das schwimmende Ventilelement (26a) auf dem Ventilsitz (26b) sitzt, eine Vorratstankseite in Bezug auf den Ventilsitz (26b) und eine Hauptzylinderseite in Bezug auf den Ventilsitz (26b) lediglich durch den Drosseldurchgang miteinander verbunden sind.

3. Hauptzylinderhydraulikfluid-Durchflusssteuerventil (26) nach Anspruch 2, wobei der Drosseldurchgang an einer Nut (26a3, 26a4) ausgebildet ist, die an einer Außenumfangsfläche des schwimmenden Ventilelements (26a) gebildet ist.

4. Hauptzylinderhydraulikfluid-Durchflusssteuerventil (26) nach einem der Ansprüche 1 bis 3, wobei ein Verschluss (28), um das Entfernen des schwimmenden Ventilelements (26a) zu verhindern, an einem unteren Ende des zylindrischen Elements (6b2, 6c2) gebildet ist.

5. Hauptzylinder (4), **gekennzeichnet durch**
einen Zylinderkörper;
einen Kolben (4a, 4c), der hermetisch und verschiebbar in den Zylinderkörper eingesetzt ist und dadurch eine Hydraulikkammer (4b, 4d) im Zylinderkörper bildet und einen Fluiddruck in der Hydraulikkammer (4b, 4d) erzeugt, wenn der Kolben (4a, 4c) betätigt wird;
eine Hydraulikfluidzufuhröffnung (4f, 4g), die im Zylinderkörper gebildet ist und immer mit der Hydraulikkammer (4b, 4d) verbunden ist; und
ein Hauptzylinderhydraulikfluid-Durchflusssteuerventil (26), das in der Hydraulikfluidzufuhröffnung (4f, 4g) angeordnet ist, wobei
das Hauptzylinderhydraulikfluid-Durchflusssteuerventil (26) das Hauptzylinderhydraulikfluid-Durchflusssteuerventil (26) nach einem der Ansprüche 1 bis 4 ist.

6. Bremsvorrichtung (1), **gekennzeichnet durch**
einen Vorratstank (5), in dem ein Hydraulikfluid bevorratet ist;
einen Hauptzylinder (4), der eine Zufuhr des Hydraulikfluids im Vorratstank (5) aufnimmt und einen Fluiddruck erzeugt, wenn der Hauptzylinder (4) betätigt wird;
einen Bremszylinder (9, 10), der durch den Fluiddruck vom Hauptzylinder (4) betätigt wird und aufgrund der Betätigung des Hauptzylinders (4) eine Bremskraft von einer normalen Bremse erzeugt; und
eine automatische Bremsvorrichtung, die zwischen dem Hauptzylinder (4) und dem Bremszylinder (9, 10) angeordnet ist und es dem Bremszylinder (9, 10) ermöglicht, durch Zuführen des Hydraulikfluids im Vorratstank (5) zum Bremszylinder (9, 10) eine Bremskraft von einer automatischen Bremse zu erzeugen, wobei der Hauptzylinder (4) der Hauptzylinder (4) gemäß Anspruch 5 ist.

## Revendications

1. Clapet de commande d'écoulement de fluide hydraulique d'un maître-cylindre (26) installé dans un passage de fluide entre un réservoir (5) et un maître-cylindre (4), ayant un élément de clapet flottant (26a) et un siège de clapet (26b) contre lequel peut venir l'élément de clapet flottant (26a) et qui commande le passage d'un fluide hydraulique entre le réservoir (5) et le maître-cylindre (4), dans lequel l'élément de clapet flottant (26a) est logé de manière mobile verticalement dans un élément cylindrique (6b2, 6c2) installé hermétiquement sur le maître-cylindre (4) par un élément d'étanchéité (23, 24) et qui forme son passage de fluide, le siège de clapet (26b) étant réalisé dans l'élément cylindrique (6b2, 6c2),
**caractérisé en ce que** la surface d'extrémité supérieure (26a1) de l'élément de clapet flottant (26a) est de forme sphérique et la surface de l'extrémité supérieure de forme sphérique peut venir contre le siège de clapet (26b).

2. Clapet de commande d'écoulement de fluide hydraulique de maître-cylindre (26) selon la revendication 1, dans lequel le passage d'étranglement traversant l'élément de clapet flottant (26a) dans la direction axiale de l'élément de clapet flottant (26a), étrangle le passage de fluide hydraulique dans l'élément de clapet flottant (26a), et dans un état dans lequel l'élément de clapet flottant (26a) est appliqué contre le siège de clapet (26b), le côté réservoir par rapport au siège de clapet (26b) et le côté maître-cylindre par rapport au siège de clapet (26b) communiquent l'un avec l'autre seulement par le passage d'étranglement.

3. Clapet de commande d'écoulement de fluide hydraulique (26) de maître-cylindre selon la revendication 2, dans lequel le passage d'étranglement est formé dans une gorge (26a3, 26a4) réalisé dans la surface périphérique extérieure de l'élément de clapet flottant (26a).

4. Clapet de commande d'écoulement de fluide hydraulique (26) de maître-cylindre selon l'une quelconque des revendications 1 à 3, dans lequel un bouchon (28) est prévu pour éviter l'enlèvement de l'élément de clapet flottant (26a) sur le côté inférieure de l'élément cylindrique (6b2, 6c2).

5. Maître-cylindre (4), **caractérisé par**:
un corps de cylindre et un piston (4a, 4c), logé dans le corps de cylindre, de façon hermétique et en mouvement coulissant, formant ainsi une chambre hydraulique (4b, 4d) dans le corps de cylindre et qui génère une pression de fluide dans la chambre hydraulique (4b, 4d) lorsque le piston (4a, 4c) est activé,
un orifice d'alimentation de fluide hydraulique (4f, 4g) réalisé dans le corps cylindrique et qui communique toujours avec la chambre hydraulique (4b, 4d), et
une valve de commande de l'écoulement de fluide hydraulique (26) du maître-cylindre est logée dans l'orifice d'alimentation de liquide hydraulique (4f, 4g),
maître-cylindre dans lequel
le clapet de commande d'écoulement de fluide hydraulique (26) de maître-cylindre est le clapet de commande d'écoulement de fluide hydraulique de maître-cylindre (26) selon l'une quelconque des revendications 1 à 4.

6. Dispositif de frein (1), **caractérisé par**:
un réservoir (5) stockant du fluide hydraulique,
un maître-cylindre (4) qui reçoit l'alimentation de fluide hydraulique du réservoir (5) et génère la pression de fluide lorsque le maître-cylindre (4) fonctionne,
un cylindre de frein (9, 10) qui est activé par la pression du fluide fourni par le maître-cylindre (4) et génère une force de freinage pour le freinage normal selon le fonctionnement du maître-cylindre (4), et
un dispositif de frein automatisé qui est installé entre le cylindre-maître et le cylindre de frein (9, 10) et permet au cylindre (9, 10) de générer une force de freinage pour le freinage automatique en fournissant le fluide hydraulique du réservoir (5) au cylindre de frein (9, 10), dans lequel le maître-cylindre (4) est le maître-cylindre (4) selon la revendication 5.
